# EUROPÄISCHE PATENTSCHRIFT

(11) **EP 0 343 678 B1**
(45) Veröffentlichungstag und Bekanntmachung des Hinweises auf die Patenterteilung: **24.03.1993**
(21) Anmeldenummer: 89109520.0
(22) Anmeldetag: 26.05.1989
(51) Int. Cl.: A23F 5/26, A23F 5/08

(54) **Verfahren zur schonenden Herstellung von Pflanzenextrakten**
Process for carefully preparing plant extracts
Procédé de préparation ménagée d'extraits de plantes

(30) Priorität: 27.05.1988 DE 3818035
(43) Veröffentlichungstag der Anmeldung: 29.11.1989
(73) Patentinhaber: Dr. Otto Suwelack Nachf. GmbH & Co., 48727 Billerbeck (DE)
(72) Erfinder:
(74) Vertreter: UEXKÜLL & STOLBERG

(56) Entgegenhaltungen:
- WO-A-83/02570
- CH-A- 294 223
- GB-A- 2 018 560
- US-A- 2 949 364
- R.J. CLARKE: "Coffee", Band 2, 1987, Kap. 6, Seiten 147-149, Elsevier Applied Science, London & New York

## Beschreibung

Die Erfindung betrifft ein Verfahren zum schonenden Herstellen von Pflanzenextrakten und insbesondere zum schonenden Herstellen von hochwertigem Kaffee-Extrakt durch Kaltextraktion von gemahlenem Röstkaffee.

Wäßriger Kaffee-Extrakt ist das Ausgangsmaterial für die Herstellung von Instant-Kaffee, eines Pulvers, welches in Wasser vollständig oder weitgehend löslich ist. Die Herstellung im industriellen Großmaßstab wird im allgemeinen in der Weise vorgenommen, daß 5 bis 8 mit gemahlenem Kaffee gefüllte Kolonnen in Serie geschaltet und im Gegenstromverfahren bei Temperaturen von 120 bis 200°C und erhöhten Drücken extrahiert werden, wobei frisches Extraktionsmittel in die jeweils am weitestgehend extrahierte Kolonne geleitet wird. Nach vollständiger Extraktion wird die erste Kolonne abgekoppelt und eine mit frischem Kaffee gefüllte Kolonne am Ende nachgeschaltet (vgl. R.J. Clark and R. McRae, Coffee, vol. 2: Technology, Elsevier Applied Sciences, Seiten 109 bis 133 (1987)). Nach diesem Verfahren können zwar gute Extraktausbeuten erzielt werden, die Qualität des erhaltenen Extraktes und damit des Endproduktes Instant-Kaffee leidet jedoch als Folge der Anwendung hoher Temperaturen und Drücke. Zum einen gehen dabei die flüchtigen Aromastoffe verloren oder werden negativ verändert, und zum anderen wird die Mikrostruktur des Kaffees zerstört, und es werden Stoffe gebildet bzw. freigesetzt, welche sich störend auf den Geschmack auswirken (vgl. Seite 126, 2. Absatz a.a.O.).

Zur Verbesserung der Qualität von Kaffee-Extrakt ist bereits vorgeschlagen worden, die Temperatur und den Druck in der letzten, den frischesten Kaffee enthaltenden Kolonne so zu

führen, daß ein Gleichgewicht zwischen der Dampfphase und der flüssigen Phase eintritt. Danach enthält die Dampfphase die flüchtigen Aromastoffe, welche nach Kondensieren dem Extrakt wieder zugefügt werden (vgl. US-PS 3 700 463). Das Verfahren kann jedoch nur zu einer leichten Geschmacksverbesserung führen, da das Gesamtverfahren nach wie vor unter hohen Temperaturen und Drücken durchgeführt wird.

In der US-PS 3 788 860 ist eine Modifikation des eingangs beschriebenen Kolonnen-Extraktionsverfahrens beschrieben, bei dem jeweils die frischesten Kolonnen und insbesondere diejenige, aus der die Flüssigkeit abgezapft wird, mit ganzen Kaffeebohnen gefüllt ist. Die Bohnen sollen in einem möglichst späten Stadium, spätestens jedoch vor dem Umsetzen in die Autoklav-Stufe, gemahlen werden. Die Qualität des aus den ganzen Bohnen abgezogenen Extraktes soll deutlich besser sein als diejenige von Extrakten, die aus gemahlenem Kaffee abgezogen werden. Das Verfahren ist technisch aufwendig, da es das Entleeren der mit ganzen Bohnen gefüllten Kolonnen, das nachträgliche Zerkleinern der ganzen Bohnen und das erneute Befüllen von Kolonnen mit den zerkleinerten Bohnen erforderlich macht. Eine kontinuierliche Durchführung dieses Verfahrens ist nicht möglich.

Schließlich ist in der US-PS 3 682 649 ein Verfahren zur Kaltextraktion von Röstkaffee beschrieben, bei dem verhältnismäßig geringe Mengen eines hochwertigen Kaffee-Extrakts gewonnen werden können. Danach wird grob gemahlener (vgl. Beispiel 1), gerösteter Kaffee mit kaltem Wasser vermischt und 5 bis 15 Minuten lang stehengelassen. Die Mischung wird anschließend Drücken von 69 bis 828 bar ausgesetzt, um einen wäßrigen Extrakt zu gewinnen. Der verbleibende Rückstand wird als normaler Kaffee weiterverwendet, d.h. er wird entweder als gemahlener Kaffee verkauft, oder aber in herkömmlichen Extraktionskolonnen zur Gewinnung von Kaffee-Extrakt verwendet. Das Verfahren dient demgemäß lediglich der "Abschöpfung" einer kleinen Menge von Geschmacks- und Aromastoffen, die unter den gewählten Bedingungen in Wasser löslich sind. Es ist zudem umständlich und nur schwer durchführbar, da der teilextrahierte Kaffee als solcher kaum vermarktbar ist. Es ist erforderlich, den feuchten Kaffeebrei in Extraktionskolonnen zu füllen oder diesen zur leichteren Handhabung vor dem Einfüllen zu trocknen. In beiden Fällen sind kostenintensive und technisch aufwendige Maßnahmen erforderlich, um den teilextrahierten Kaffee weiter zu verwerten.

Es ist bisher kein wirtschaftliches Verfahren zur Herstellung großer Mengen von qualitativ hochwertigem Kaffee-Extrakt bekannt, bei dem einerseits die geschmacklichen, optischen und sensorischen Eigenschaften von frisch gebrühtem Kaffee erzielt werden und welches andererseits Ausbeuten liefert, die mit denjenigen bei herkömmlicher Kolonnenextraktion vergleichbar sind.

Es ist demgemäß Aufgabe der Erfindung, ein schonendes, zugleich jedoch wirtschaftliches und im industriellen Maßstab durchführbares Verfahren zu schaffen, mit Hilfe dessen hochwertiger Kaffee-Extrakt hergestellt werden kann, der qualitativ mit frisch gebrühtem Kaffee vergleichbar ist.

Zur Lösung der Aufgabe wird das erfindungsgemäße Kalt-Extraktions-Verfahren vorgeschlagen, bei dem entgegen der bisher im Stand der Technik empfohlenen Vorgehensweise (s. o.) Kaffee stufenweise in wäßriger Aufschlämmung bis zu extremer, d. h. kolloidaler Feinheit vermahlen und kalt extrahiert wird.

Als Ausgangsmaterial für das erfindungsgemäße Verfahren dient gemahlener Röstkaffee mit einer mittleren Partikelgröße von 0,2 bis 2 mm. Die Vermahlung kann auf herkömmliche Weise durch Vermahlen der trockenen gerösteten Bohnen erfolgen; vorzugsweise beträgt die mittlere Partikelgröße des Kaffees in der Ausgangsstufe (Stufe a)) des erfindungsgemäßen Verfahrens 200 bis 400 µm. Der Kaffee wird anschließend in kaltem Wasser aufgeschlämmt und nach Extraktion der löslichen Bestandteile wird die wäßrige Phase von den festen Bestandteilen abgetrennt und gesammelt.

Gemäß einer besonders bevorzugten Ausführungsform der Erfindung werden zu Beginn des Verfahrens die ganzen gerösteten Bohnen mit kaltem Wasser versetzt und in Wasser bis zu der oben angegebenen Partikelgröße vermahlen. Zum Mahlen der mit Wasser versetzten ganzen Röstkaffee-Bohnen eignet sich beispielsweise ein Nemo-Macerator, wie er von der Firma Netsch auf den Markt gebracht wird.

Vorzugsweise wird in der Stufe a) der vermahlene Röstkaffee trocken oder feucht über eine Förderschnecke in eine Mischvorrichtung dosiert, der gleichzeitig das kalte Wasser zugeführt wird. Im Sinne der vorliegenden Erfindung weist kaltes Wasser Temperaturen von 0 bis 40, vorzugsweise 5 bis 25 und in besonders bevorzugter Weise 8 bis 12°C auf.

Das Verhältnis von Wasser zu Röstkaffee sollte so gewählt sein, daß der Trockenstoffgehalt der in der Mischvorrichtung hergestellten Aufschlämmung 20 bis 60 und vorzugsweise etwa 40 Gew.% beträgt. Es kann jedoch auch mit mehr oder weniger Wasser gearbeitet werden. Gewöhnlich beträgt das Verhältnis von Wasser zu Röstkaffee 1:1 bis 5:1 und vorzugsweise 2:1 bis 3:1.

Die erforderliche Verweilzeit der Aufschlämmung in dem Mischer ist außerordentlich kurz. So ist es ausreichend, wenn das Wasser vor der Phasentrennung 5 bis 300 Sekunden und vorzugsweise etwa 200 Sekunden lang auf die festen Bestandteile einwirkt.

Aus dem Mischer wird die Aufschlämmung zu einer zur Flüssig-Feststofftrennung geeigneten Vorrichtung geführt. Die Trennung kann grundsätzlich nach jeglichem geeigneten Verfahren durchgeführt werden, beispielsweise durch Pressen, Zentrifugieren oder Dekantieren.

Gemäß einer besonders bevorzugten Ausführungsform der Erfindung wird die Trennung in einer Siebzentrifuge vorgenommen. Zu diesem Zweck können beispielsweise Siebmantelzentrifugen, Siebschneckenzentrifugen, Schälzentrifugen, Druckfilter- oder Stülpfilter-Zentrifugen verwendet werden. Als besonders geeignet hat sich eine Siebschnecken-Zentrifuge erwiesen.

Der in der Stufe a) erhaltene wäßrige Extrakt wird gesammelt während der Rückstand erfindungsgemäß nachfolgend einem Mischer der Stufe b) zugeleitet und erneut in kaltem Wasser aufgeschlämmt wird. Die Aufschlämmung wird beispielsweise auf einen Trockenstoffgehalt von etwa 10 bis 30 und vorzugsweise etwa 20 Gew.% eingestellt und anschließend einer kolloidalen Vermahlung bis zu einer Partikelgröße im Bereich von 50 bis 200 und vorzugsweise 150 bis 200 µm zugeführt. Für diesen Zweck haben sich beispielsweise Kolloidmühlen oder Kugelmühlen als geeignet erwiesen.

Die Aufschlämmung des mikrofein vermahlenen Rückstands in Stufe b) wird anschließend einer Trennvorrichtung wie oben zu Stufe a) angegeben zugeführt. Auch in dieser Stufe hat sich die Verwendung einer Zentrifuge und insbesondere einer Siebschnecken-Zentrifuge als besonders geeignet erwiesen.

Der in Stufe b) gewonnene wäßrige Extrakt enthält weitere hochwertige Aromastoffe und Extraktbestandteile, wie sie bisher einer Kaltextraktion nicht zugänglich waren.

Gemäß einer besonders bevorzugten Ausführungsform der Erfindung wird der Vorgang nach Stufe b) in einer an diese anschließenden Stufe c) wiederholt, indem die festen Bestandteile aus Stufe b) erneut in einen Mischer geleitet und bis zu einem Trockenstoffgehalt wie für die Stufe b) angegeben, mit kaltem Wasser versetzt werden. Die Aufschlämmung wird einer zusätzlichen Feinstvermahlung bis zu einer mittleren Partikelgröße von 5 bis 150 µm und vorzugsweise bis zu 50 bis 150 µm unterzogen. Zu diesem Zweck kann wiederum eine Kolloidmühle, vorzugsweise eine Zahnkolloidmühle oder eine Kugelmühle, eingesetzt werden. Zum Erreichen von Partikelgrößen unterhalb 100 µm sollte ein Homogenisator oder eine Kugelmühle verwendet werden. Die Aufschlämmung wird wie in den Stufen a) und b) beschrieben einer Trennvorrichtung zugeführt und die wäßrige Phase von den festen Bestandteilen abgetrennt und gesammelt.

Erfindungsgemäß ist es ferner möglich, die festen Bestandteile aus Stufe a) ganz oder teilweise direkt der Stufe c) zuzuführen. Gemäß einer besonders bevorzugten Ausführungsform der Erfindung wird die Aufschlämmung in den Stufen b) und c) und insbesondere in Stufe c) im Anschluß an die Kolloidvermahlung mit Ultraschall behandelt. Zu diesem Zweck können bekannte Ultraschalldesintegratoren verwendet werden, wie sie beispielsweise unter der Bezeichnung Sonifier ® auf dem Markt erhältlich sind. Im Anschluß an die Ultraschallbehandlung wird die Aufschlämmung wie zuvor beschrieben in wäßrige Phase und feste Bestandteile getrennt und die wäßrige Phase gesammelt.

Der in der Stufe c) erhaltene Extrakt weist eine verhältnismäßig niedrige Trockenstoffkonzentration auf. Gemäß einer besonders bevorzugten Ausführungsform der Erfindung wird er demgemäß in die Stufe b) zurückgeführt, wo er zum Aufschlämmen der aus Stufe a) stammenden, festen Bestandteile verwendet oder mitverwendet werden kann.

Die Temperatur des zum Aufschlämmen der festen Bestandteile in den Stufen a), b) und c) verwendeten Wassers beträgt 0 bis 40, vorzugsweise 5 bis 25 und in besonders bevorzugter Weise 8 bis 120°C. Die Temperatur der Aufschlämmungen in den verschiedenen Verfahrensstufen sollte gegebenenfalls durch Kühlen in den zuvor angegebenen Temperaturbereichen gehalten werden. Wie bereits oben dargelegt ist es ausreichend, wenn das Wasser in den einzelnen Verfahrensstufen 5 bis 300 Sekunden lang auf die festen Bestandteile einwirkt. Die Extraktgewinnung erfolgt demgemäß innerhalb sehr kurzer Zeit, und es wird auch auf diese Weise eine Schädigung der Aromastoffe vermieden.

Die in den Stufen a), b) und gegebenenfalls c) erhaltenen Extrakte können erfindungsgemäß getrennt oder vereinigt einer Nachklärung unterworfen werden, um das Kaffee-Öl einerseits und gröbere Schwebstoffe andererseits abzutrennen. Zu diesem Zweck kann beispielsweise eine 3-Phasen-Dekantierzentrifuge und/oder ein Separator verwendet werden.

Der von Kaffee-Öl und Schwebstoffen befreite Extrakt kann nunmehr nach bekannten Verfahren auf die gewünschte Konzentration, vorzugsweise auf einen Trockenstoffgehalt von 30 bis 50 Gew.%, gebracht werden. Das Aufkonzentrieren kann beispielsweise durch Eindampfen im Vakuum (Evaporieren), durch Membranbehandlung wie Ultrafiltration oder Umkehrosmose sowie durch Gefrierkonzentrieren erfolgen.

Ferner können die Extrakte getrennt oder vereinigt getrocknet werden. In diesem Zusammenhang hat sich Gefriertrocknen bis zu einem Restwassergehalt von etwa 2 bis 4 Gew.% als besonders geeignet erwiesen. Es kommen jedoch auch andere Trocknungsverfahren, wie beispielsweise Sprühtrocknen, in Betracht. Ferner können die Extrakte durch Tiefgefrieren beispielsweise in Form von Granula stabilisiert werden.

Die Extrakte aus den Stufen a), b) und gegebenenfalls c) des erfindungsgemäßen Verfahrens enthalten überraschenderweise im wesentlichen das gesamte Spektrum der Kaffeeinhaltsstoffe, die das Aroma und die sonstigen sensorischen Eigenschaften von frisch gebrühtem Kaffee bestimmen mit einer Ausbeute von etwa 20 bis 30 Gew.%, bezogen auf den eingesetzten Röstkaffee. Die Extrakte sind ausgezeichnet zum Veredeln von auf herkömmliche Weise hergestelltem Instant-Kaffee geeignet und sie können ferner zum Aromatisieren von zum menschlichen Verzehr vorgesehenen Produkten wie beispielsweise Getränken, Süßspeisen, Gebäck und Konfekt sowie von Substanzen zur Verwendung im pharmazeutischen Bereich dienen.

Zur Gewinnung einer Instant-Kaffee-Matrix können ferner die festen Bestandteile aus den Stufen a), b) und/oder c) in einer nachgeschalteten Stufe d) aufgeschlossen werden, um die höhermolekularen Kohlenhydrate in lösliche Verbindungen umzuwandeln.

Dies kann durch herkömmliche Temperaturbehandlung bei Temperaturen zwischen 150 bis 200°C erfolgen. Zu diesem Zweck wird auf übliche Weise der beim Zentrifugieren in den jeweiligen Stufen gewonnene Feststoff in Wasser aufgeschlämmt, wobei vorzugsweise ein Trockenstoffgehalt von etwa 20 Gew.% eingestellt wird. Die Aufschlämmung wird in bekannter Weise unter Druck auf 150 bis 200°C erhitzt und die Masse nach Abkühlen wie in den Stufen a) und b) beschrieben einer Flüssig-Feststofftrennung zugeführt. Der Extrakt weist einen Trockenstoffgehalt von etwa 3 bis 10 Gew.% auf, wobei die Ausbeute in dieser Stufe bezogen auf den eingesetzten Rohkaffee 10 bis 20 Gew.% betragen kann.

Gemäß einer besonders bevorzugten Ausführungsform der Erfindung werden die festen Bestandteile in Stufe d) aufgeschlossen, indem man sie einer Hochtemperatur-Kurzzeit-Behandlung bei Temperaturen im Bereich von 200 bis 400°C über einen Zeitraum von 5 bis 0,01 Sekunden unterwirft. Dies kann beispielsweise durchgeführt werden, indem man die Aufschlämmung in einen Druckkessel überführt und über eine Düse überhitzten Wasserdampf oder ein inertes Gas injiziert. Es können jedoch auch andere Quellen für konzentrierte Energie wie Mikrowellen, Laser und dergleichen zum Kurzzeiterhitzen verwendet werden.

Der in Stufe d) gewonnene Extrakt kann gesondert oder gemeinsam mit den Extrakten aus den vorangegangenen Stufen wie oben beschrieben geklärt und konzentriert bzw. getrocknet oder tiefgefroren werden. Werden die Extrakte aus den Stufen a) bis d) vereinigt und getrocknet, so wird ein Instantkaffee mit außerordentlich guter Qualität und in einer Ausbeute von 30 bis 45 Gew.% bezogen auf den eingesetzten Röstkaffee erhalten.

Vorzugsweise wird das erfindungsgemäße Verfahren kontinuierlich durchgeführt. Zu diesem Zweck wird das Ausgangsmaterial sowie die festen Bestandteile durch geeignete Fördereinrichtungen jeweils in die nächstfolgende Verfahrensstufe transportiert. Zum Transport des Röstkaffees in Stufe a) kann beispielsweise eine Förderschnecke mit flexiblem Schlauch eingesetzt werden. Der Transport der festen Bestandteile aus den jeweiligen Trennstufen in die nachgeschalteten Mischer kann durch eine in der Trennvorrichtung vorhandene Schnecke erfolgen, während die Aufschlämmungen aus den Mischern vorzugsweise durch Pumpen weitertransportiert werden. Die Extrakte können kontinuierlich aus den Trennvorrichtungen der verschiedenen Verfahrensstufen durch eine Nachkläranlage, wie einen 3-Phasen-Dekanter geleitet und getrennt oder vereinigt gesammelt werden. Gleichzeitig kann kontinuierlich das Kafffee-Öl gesammelt werden.

Wie bereits oben beschrieben kann insbesondere innerhalb des kontinuierlichen Verfahrensablaufs die wäßrige Phase aus Stufe c) in die Stufe b) rückgeführt werden und der Rückstand aus der Nachklärung der Extrakte kann in der Stufe d) mitverarbeitet werden. Auf diese Weise wird ein geschlossener kontinuierlich Verfahrensablauf geschaffen, bei dem lediglich zu Beginn das Ausgangsmaterial eingespeist wird, und am Ende die festen Bestandteile aus der Stufe d) verworfen werden. Die Dauer eines Umlaufs beträgt unter den oben angegebenen Bedingungen nur etwa 15 bis 20 Minuten, während für die Extraktion einer entsprechenden Kaffeemenge im herkömmlichen Kolonnenverfahren etwa 120 Minuten benötigt werden.

Das erfindungsgemäße mehrstufige Extraktionsverfahren bietet demgemäß die Möglichkeit, schnell und auf außerordentlich schonende Weise Kaffee-Extrakt der höchsten Qualitätsstufe in großer Ausbeute zu erzielen. Wie oben dargelegt kann in den Stufen a) bis c) mit einer Gesamtausbeute von etwa 20 bis 30 Gew.% bezogen auf den eingesetzten Röstkaffee gerechnet werden. Die Stufe d) kann weitere 10 bis 15 Gew.% Extraktbestandteile liefern, so daß bei Durchführung des Gesamtverfahrens eine Ausbeute von etwa 40 bis 45 Gew.%, bezogen auf den eingesetzten Röstkaffee erhalten werden kann.

Das erfindungsgemäß hergestellte Produkt bildet einen Instantkaffee mit überragenden Eigenschaften bezüglich seiner Geschmacks- und Duftstoffe einerseits und seiner Viskosität und des vermittelten Mundgefühls andererseits.

Erfindungsgemäß ist daher ein außerordentlich schnelles und wirtschaftliches Verfahren geschaffen worden, welches die Herstellung von Kaffee-Extrakt höchster Qualitätsstufe in bisher nicht erreichten Ausbeuten erlaubt.

Das Verfahren wird nachfolgend anhand von Beispielen erläutert.

### Beispiel 1

100 kg gerösteter, filterfein gemahlener Kaffee (Mischung Robusta/Arabica im Verhältnis 80:20) wurden unter Rühren mit 250 Litern Wasser einer Temperatur von 15°C versetzt. Die Aufschlämmung wurde 2 Minuten lang vorsichtig gerührt. Sie wies einen Trockenstoffgehalt von ca. 38 Gew.% auf.

Die Mischung wurde in eine Stülpfilter-Zentrifuge überführt und bei 1500 g zentrifugiert. Es wurden 190 Liter eines wäßrigen Extrakts mit einem Trockenstoffgehalt von 10% entsprechend 19% Ausbeute bezogen auf den eingesetzten Röstkaffee erhalten.

Die Menge des Rückstandes betrug 160 kg. Durch Zugeben von 245 kg Wasser wurde eine zweite Aufschlämmung mit einem Trockenstoffgehalt von 20 Gew.% erhalten. Diese wurde zunächst in eine Kolloidmühle (Zahnscheibenmühle) und anschließend in einen Homogenisator (Hochdruckhomogenisator, 700 bar) geleitet. Die Größe der Partikel in der Aufschlämmung betrug etwa 10 bis 40 µm.

Anschließend wurde die Aufschlämmung wie zuvor beschrieben in einer Stülpfilter-Zentrifuge in wäßrigen Extrakt und Rückstand getrennt. Es wurden 229,5 l wäßriger Extrakt mit einem Trockenstoffgehalt von 6 Gew.% entsprechend 13,7 Gew.% Ausbeute bezogen auf den eingesetzten Röstkaffee erhalten.

Die Menge des Rückstandes betrug 156,23 kg. Durch Zugeben von 159,92 kg Wasser wurde erneut eine Aufschlämmung mit einem Trockenstoffgehalt von etwa 20 Gew.% hergestellt. Die Mischung wurde in einem Druckkessel bei 10 bis 11 bar auf 180°C erhitzt, abgekühlt und wie oben beschrieben zentrifugiert. Dabei wurden 190,5 l wäßriger Extrakt mit einem Trockenstoffgehalt von 6 Gew.% entsprechend 11,43% Ausbeute bezogen auf den eingesetzten Röstkaffee erhalten.

Die Extraktausbeute bezogen auf den eingesetzten Röstkaffee ist in der nachfolgenden Tabelle zusammengefaßt.

**Tabelle**

| | Volumen Extrakt | T.S. Extrakt | Gesamtmenge Extrakt |
|---|---|---|---|
| Stufe a) | 190 l | 10% | 19,00 kg |
| Stufe b) | 229,5 l | 6% | 13,77 kg |
| Stufe d) | 190,5 l | 6% | 11,43 kg |
| | | | 44,10 kg |

Wie die Tabelle zeigt, wurden in den Stufen a) und b) insgesamt etwa 33% des eingesetzten Röstkaffees als Extrakt zurückgewonnen. Die Gesamtausbeute betrug 40,43 kg Kaffee-Extrakt als Trockenstoff entsprechend 44,1% bezogen auf den eingesetzten Röstkaffee, wobei diese Extrakte noch das Kafffee-Öl sowie geringe Mengen sonstiger, bei der Nachklärung entfernbarer Feinstpartikel enthielten.

### Beispiel 2

Röstkaffee mit einer durchschnittlichen Partikelgröße von etwa 200 bis 400 µm wurde mit einer Dosierleistung von 120 kg/h durch eine Förderschnecke in einen Ruberg-Mischer (Mischer I) geleitet. Vor dem Mischer wurde normales Leitungswasser mit einer Temperatur von etwa 15°C in einer Menge von 160 l/h in die Leitung eingespeist. Die in dem Mischer gebildete Aufschlämmung wies einen Trockenstoffgehalt von etwa 40% auf und eine Temperatur betrug 20 bis 21°C auf. Aus dem Mischer I wurde die Aufschlämmung kontinuierlich zu einer Siebschneckenzentrifuge (Zentrifuge I) mit einem Siebporendurchmesser von 150 µm geleitet und in wäßrige Phase und feste Bestandteile getrennt. Die wäßrige Phase, deren Trockenstoffgehalt etwa 12 bis 13 Gew.% betrug, wurde in ein Sammelgefäß I geleitet. Die festen Bestandteile wurden wiederum in einen Ruberg-Mischer (Mischer II) überführt, wobei die rückgeführte wäßrige Phase aus der nachfolgenden Trennstufe unmittelbar vor dem Mischer II (siehe unten) mit einer Dosierleistung von ca. 230 l/h in die Leitung eingespeist wurde. Der Trockenstoffgehalt der Aufschlämmung in dem Mischer II betrug etwa 20 Gew.%.

Aus dem Mischer II wurde die Aufschlämmung kontinuierlich über eine Mohno-Pumpe zu einer Kolloidmühle (Kolloidmühle I) geleitet, in welcher die Partikelgröße der festen Bestandteile auf durchschnittlich etwa 150 bis 200 µm reduziert wurden. Aus der Kolloidmühle I wurde die Aufschlämmung anschließend zu einer Siebschneckenzentrifuge II mit einem Siebporendurchmesser von 100 µm geleitet und in wäßrige Phase und feste Bestandteile getrennt. Die wäßrige Phase, die einen Trockenstoffgehalt von etwa 6,5 bis 7% aufwies, wurde ebenfalls in den Sammelbehälter I eingespeist.

Die festen Bestandteile aus der Zentrifuge II wurden wie zuvor beschrieben unter Hinzufügung von kaltem Wasser der angegebenen Temperatur mit einer Dosierleistung von 250 l/h in einen Ruberg-Mischer (Mischer III) und von dort über eine Mohno-Pumpe II zu einer Kolloidmühle II geleitet, in der die Partikelgröße der festen Bestandteile auf durchschnittlich etwa 100 bis 150 µm reduziert wurde. Anschließend wurde die Mischung durch einen Ultraschalldesintegrator (Sonifier ®) geführt und darauf folgend die wäßrige Phase in einer Siebschneckenzentrifuge III von den festen Bestandteilen abgetrennt.

Die wäßrige Phase aus der Zentrifuge III wurde über einen Dekanter I wie bereits oben erwähnt in die Leitung unmittelbar vor dem Mischer II eingespeist und diente kontinuierlich zur Aufschlämmung der festen Bestandteile aus der Zentrifuge I.

Die festen Bestandteile aus der Zentrifuge III sowie der Schlamm aus Dekanter I wurden wie für die vorangegangenen Stufen beschrieben in einen Mischer IV geleitet und mit Wasser aufgeschlämmt. Der Trockenstoffgehalt der Aufschlämmung in dem Mischer IV betrug etwa 18 Gew.%. Die Mischung wurde über eine Pumpe V in ein Druckgefäß geleitet, welches über eine Düse bei einem Überdruck von 8 bar mit Dampf einer Temperatur von 170°C beschickt wurde. Die Verweilzeit der Mischung in dem Druckgefäß betrug etwa 40 bis 50 Sekunden. Sie wurde anschließend über einen Kühler in ein Entspannungsgefäß geleitet und von dort durch eine Pumpe VI mit einer Leistung von etwa 500 l/h in einen 3-Phasen-Dekanter gepumpt. Der Trockenstoffgehalt der Mischung betrug in diesem Stadium etwa 12 Gew.%, und sie wies eine Temperatur 90 bis 100°C auf.

Nach Trennung der Mischung in feste Bestandteile, Kaffee-Öl und wäßrige Phase wurden die festen Bestandteile als Abfall verworfen, das Kaffee-Öl gesammelt und die wäßrige Phase, nachfolgend als "Heißextrakt" bezeichnet, über einen Kühler in ein Sammelgefäß II geleitet.

Die in dem Sammelgefäß I vereinigten wässrigen Phasen aus den Zentrifugen I und II, nachfolgend als "Kaltextrakt" bezeichnet (Trockenstoffgehalt etwa 7 bis 9 Gew.% ), wurden zur Nachklärung ebenfalls zu einem 3-Phasen-Dekanter geleitet und in wäßrige Phase, Kaffee-Öl und Schlamm aufgetrennt.

Der Schlamm wurde in den Mischer IV zurückgeleitet und zusammen mit den festen Bestandteilen aus der Siebzentrifuge III der oben beschriebenen Temperaturbehandlung unterzogen.

Der geklärte Kaltextrakt wurde mit dem geklärten Heißextrakt vereinigt, durch Umkehrosmose bis zu einem Trockenstoffgehalt von 40 Gew.% aufkonzentriert, auf 3 bis 5°C abgekühlt und anschließend gefriergetrocknet.

Die Gesamtausbeute an Kaffee-Extrakt als Trockenstoff betrug durchschnittlich etwa 40 Gew.% bezogen auf den eingesetzten Röstkaffee, wobei etwa 25 Gew.% auf den Kaltextrakt und etwa 15 Gew.% auf den Heißextrakt entfielen.

Die Dauer eines Umlaufs vom Einspeisen des Ausgangsmaterials bis zum Auswerfen des Abfalls im Anschluß an die Heißextraktion betrug etwa 18 Minuten.

### Beispiel 3

Das gefriergetrocknete Endprodukt gemäß Beispiel 1 wurde als Instant-Kaffee verkostet, wobei jeweils etwa 2,5 g des Produktes in 180 ml heißem Wasser gelöst wurden. Es wurde ein Kaffee erhalten, dessen Viskosität und Mundgefühl mit den entsprechenden Eigenschaften von frisch gebrühtem Kaffee übereinstimmten und dessen Geschmack und Aroma bei der Verkostung durch ein Fachgremium als exzellent (Note 1) bezeichnet wurden.

## Patentansprüche

1. Verfahren zur Herstellung von Kaffee-Extrakt durch Extrahieren von gemahlenem Röstkaffee mit kaltem Wasser, dadurch gekennzeichnet, daß man
a) Röstkaffee, vermahlen zu einer üblichen Partikelgröße von 0,2 bis 2 mm, in kaltem Wasser aufschlämmt und nach Extraktion der löslichen Bestandteile die wäßrige Phase von den festen Bestandteilen abtrennt und sammelt und
b) die festen Bestandteile aus Stufe a) einer weiteren Vermahlung in kaltem Wasser bis zu einer mittleren Partikelgröße von 50 bis 200 µm unterwirft und nach Extraktion der löslichen Bestandteile die wäßrige Phase von den festen Bestandteilen abtrennt und sammelt.

2. Verfahren nach Anspruch 1, dadurch gekennzeichnet, daß man den Röstkaffee für Stufe a) in kaltem Wasser mahlt.

3. Verfahren nach den Ansprüchen 1 oder 2, dadurch gekennzeichnet, daß man
c) die festen Bestandteile aus den Stufen a) und/oder b) einer zusätzlichen Vermahlung in kaltem Wasser bis zum Erreichen einer mittleren Partikelgröße von 5 bis 150 µm unterwirft und nach Extraktion der löslichen Bestandteile die wäßrige Phase von den festen Bestandteilen abtrennt und sammelt.

4. Verfahren nach den Ansprüchen 1 bis 3, dadurch gekennzeichnet, daß man die nach der Vermahlung in den Stufen b) und/oder c) erhaltenen Aufschlämmungen anschließend einer Ultraschall-Behandlung unterwirft.

5. Verfahren nach den Ansprüchen 1 bis 4, dadurch gekennzeichnet, daß die Temperatur des zum Aufschlämmen der festen Bestandteile in den Stufen a), b) und gegebenenfalls c) verwendeten Wassers 0 bis 40, vorzugsweise 5 bis 25 und in besonders bevorzugter Weise 8 bis 12°C beträgt.

6. Verfahren nach den Ansprüchen 1 bis 5, dadurch gekennzeichnet, daß die mittlere Partikelgröße in Stufe a) 200 bis 400 µm beträgt.

7. Verfahren den Ansprüchen 1 bis 6, dadurch gekennzeichnet, daß die mittlere Partikelgröße in Stufe b) 150 bis 200 µm beträgt.

8. Verfahren nach den Ansprüchen 1 bis 7, dadurch gekennzeichnet, daß die mittlere Partikelgröße in Stufe c) 50 bis 150 µm beträgt.

9. Verfahren nach einem der Ansprüche 1 bis 8, dadurch gekennzeichnet, daß die Aufschlämmungen in Stufe a) einen Trockenstoffgehalt von 20 bis 60 Gew.%, vorzugsweise etwa 40 Gew.% und in den Stufen b) und c) einen Trockenstoffgehalt von 10 bis 30, vorzugsweise etwa 20 Gew.% aufweisen.

10. Verfahren den Ansprüchen 1 bis 9, dadurch gekennzeichnet, daß man das Wasser in den Stufen a), b) und gegebenenfalls c) vor dem Abtrennen 5 bis 300 Sekunden, vorzugsweise etwa 200 Sekunden lang auf die festen Bestandteile einwirken läßt.

11. Verfahren nach den Ansprüchen 1 bis 10, dadurch gekennzeichnet, daß man
d) die festen Bestandteile aus den Stufen b) und/oder c) in Wasser aufschlämmt, einer Temperatur-Behandlung bei Temperaturen im Bereich von 150 bis 200°C unterwirft und die wäßrige Phase von den festen Bestandteilen abtrennt und sammelt.

12. Verfahren nach den Ansprüchen 1 bis 10, dadurch gekennzeichnet, daß man
d) die festen Bestandteile aus den Stufen b) und/oder c) in Wasser aufschlämmt und einer Hochtemperatur-Kurzzeit-Behandlung bei Temperaturen im Bereich von von 200 bis 400°C über einen Zeitraum von 5 Minuten bis 0,01 Sekunden unterwirft.

13. Verfahren nach den Ansprüchen 1 bis 12, dadurch gekennzeichnet, daß man die in den Stufen a), b), c) und/oder d) gesammelten wäßrigen Phasen getrennt oder vereinigt einer Nachklärung in einer Vorrichtung unterwirft, die das gleichzeitige Abtrennen des Kafffee-Öls zuläßt.

14. Verfahren nach den Ansprüchen 1 bis 13, dadurch gekennzeichnet, daß man das Verfahren kontinuierlich durchführt, indem man
i) den Röstkaffee sowie die festen Bestandteile aus den Stufen a) bis d) der jeweils folgenden Verfahrensstufe kontinuierlich durch geeignete Fördereinrichtungen zuführt und
ii) die wäßrigen Phasen aus den Stufen a) bis d) kontinuierlich sammelt.

15. Verfahren nach Anspruch 14, dadurch gekennzeichnet, daß man die wäßrige Phase aus Stufe c) in die Stufe b) rückführt.

16. Verfahren nach den Ansprüchen 1 bis 15, dadurch gekennzeichnet, daß man die in den Stufen a), b), c) und/oder d) gesammelten wäßrigen Phasen getrennt oder vereinigt durch Evaporieren und/oder Membranbehandlung und/oder Gefrierkonzentrieren aufkonzentriert.

17. Verfahren nach den Ansprüchen 1 bis 16, dadurch gekennzeichnet, daß man die in den Stufen a), b), c) und/oder d) gesammelten wäßrigen Phasen getrennt oder vereinigt bis zu einem Restwassergehalt von 2 - 4 Gew.% trocknet.

18. Verfahren nach Anspruch 17, dadurch gekennzeichnet, daß die Trocknung durch Gefriertrocknen erfolgt.

19. Verfahren nach den Ansprüchen 1 bis 16, dadurch gekennzeichnet, daß man die in den Stufen a), b), c) und/oder d) gesammelten wäßrigen Phasen getrennt oder vereinigt durch Tiefgefrieren stabilisiert.

20. Verwendung der aus den Stufen a), b) und gegebenenfalls c) des Verfahrens nach den Ansprüchen 1 bis 10 und 13 is 18 gewonnenen Kaffee-Extrakte zum Aromatisieren von für den menschlichen Verzehr geeigneten Produkten und/oder zum Veredeln von Pulverkaffee.

## Claims

1. Process for the production of coffee extract by extracting ground roasted coffee with cold water, characterized in that
a) roasted coffee, ground to a usual particle size of 0.2 to 2 mm, is suspended in cold water, and after extraction of the soluble components the aqueous phase is separated from the solid components and is collected, and
b) the solid components of step a) are subjected to a further grinding in cold water to give an average particle size of 50 to 200 µm, and after extraction of the soluble components the aqueous phase is separated from the solid components and is collected.

2. Process according to claim 1, characterized in that the roasted coffee for use in step a) is ground in cold water.

3. Process according to claims 1 or 2, characterized in that
c) the solid components of steps a) and/or b) are subjected to an additional grinding process in cold water to reach an average particle size of 5 to 150µm, and after extraction of the soluble components the aqueous phase is separated from the solid components and is collected.

4. Process according to claims 1 to 3, characterized in that the slurries obtained after grinding in steps b) and/or c), are subjected to a subsequent ultrasonic treatment.

5. Process according to claims 1 to 4, characterized in that the temperature of the water, which is utilized for suspending the solid components in steps a), b), and optionally c), is 0 to 40°C, preferably 5 to 25°C and most preferably 8 to 12°C.

6. Process according to claims 1 to 5, characterized in that the average particle size in step a) is 200 to 400µm.

7. Process according to claims 1 to 6, characterized in that the average particle size in step b) is 150 to 200µm.

8. Process according to claims 1 to 7, characterized in that the average particle size in step c) is 50 to 150µm.

9. Process according to one of claims 1 to 8, characterized in that the suspensions in step a) have a solids content of 20 to 60% by weight, preferably about 40% by weight, and in steps b) and c) a solids content of 10 to 30% by weight, preferably about 20% by weight.

10. Process according to claims 1 to 9, characterized in that the water, which is utilized in steps a), b), and optionally c), is allowed to react with the solid components for 5 to 300 seconds, preferably about 200 seconds, prior to separation.

11. Process according to claims 1 to 10, characterized in that
d) the solid components of steps b) and/or c) are suspended in water, subjected to a temperature treatment at temperatures in the range of 150 to 200°C, and the aqueous phase is separated from the solid components and is collected.

12. Process according to claims 1 to 10, characterized in that
d) the solid components of steps b) and/or c) are suspended in water and are subjected to a high temperature short time treatment at temperatures in the range of 200 to 400°C for 5 minutes to 0.01 seconds.

13. Process according to claims 1 to 12, characterized in that the aqueous phases, which are collected in steps a), b), c) and/or d), are separately or in combination subjected to a subsequent clarification step in an apparatus, which simultaneously allows for the separation of the coffee oil.

14. Process according to claims 1 to 13, characterized in that the process is carried out continuously by
i) continuously adding the roasted coffee as well as the solid components of steps a) to d) into the respective subsequent process steps by suitable transport means and
ii) continuously collecting the aqueous phases of steps a) to d).

15. Process according to claim 14, characterized in that the aqueous phase of step c) is recycled to step b).

16. Process according to claims 1 to 15, characterized in that the aqueous phases, which are collected in steps a), b), c), and/or d), are separately or in combination concentrated by evaporation and/or membrane treatment and/or freeze drying.

17. Process according to claims 1 to 16, characterized in that the aqueous phases, which are collected in steps a), b), c), and/or d), are separately or in combination dried to a residual water content of 2 to 4% by weight.

18. Process according to claim 17, characterized in that the drying is carried out by freeze drying.

19. Process according to claims 1 to 16, characterized in that the aqueous phases, which are collected in steps a), b), c), and/or d), are separately or in combination stabilized by deep freezing.

20. Use of the coffee extracts obtained from process steps a), b), and optionally c) according to claims 1 to 10 and 13 to 18 for aromatizing products, which are suitable for human consumption and/or for improving instant coffee.

## Revendications

1. Procédé de fabrication d'un extrait de café par extraction dans l'eau froide, de café moulu torréfié, caractérisé en ce que
a) l'on met en suspension du café torréfié, moulu à sa taille habituelle de grain de 0,2 à 2 mm, dans de l'eau froide et en ce qu'après l'extraction des composants solubles, on sépare la phase aqueuse des composants solides et la récupère, et en ce que
b) l'on soumet les composants solides obtenus à l'étape a) à une autre mouture, dans l'eau froide, jusqu'à obtention d'une grosseur moyenne des particules de 50 à 200 µm et en ce qu'après extraction des composants solubles, l'on sépare la phase aqueuse des composants solides et la récupère.

2. Procédé selon la revendication 1, caractérisé en ce que l'on moud le café torréfié destiné à l'étape a) dans l'eau froide.

3. Procédé selon les revendications 1 ou 2, caractérisé en ce que
c) on soumet les composants solides obtenus au cours des étapes a) et/ou b) à une mouture supplémentaire dans de l'eau froide, jusqu'à obtention d'une grosseur moyenne des particules de 5 à 150 µm et en ce qu'après extraction des composants solubles, l'on sépare la phase aqueuse des composants solides et la récupère.

4. Procédé selon les revendications 1 à 3, caractérisé en ce que l'on soumet ensuite les suspensions obtenues après mouture, au cours des étapes b) et/ou c), à un traitement par ultrasons.

5. Procédé selon les revendications 1 à 4, caractérisé en ce que la température de l'eau utilisée pour la mise en suspension des composants solides pendant les étapes a), b) et, le cas échéant, c), est située entre 0 et 40 °C, de préférence entre 5 et 25, et de façon particulièrement préférée entre 8 et 12 °C.

6. Procédé selon les revendications 1 à 5, caractérisé en ce qu'au cours de l'étape a), la grosseur moyenne des particules est de 200 à 400 µm.

7. Procédé selon les revendications 1 à 6, caractérisé en ce qu'au cours de l'étape b), la grosseur moyenne des particules est de 150 à 200 µm.

8. Procédé selon les revendications 1 à 7, caractérisé en ce qu'au cours de l'étape c), la grosseur moyenne des particules est de 50 à 150 µm.

9. Procédé selon l'une des revendications 1 à 8, caractérisé en ce que les suspensions correspondant à l'étape a) présentent une teneur en matière sèche de 20 à 60 % en poids, de préférence de l'ordre de 40 % en poids, et en ce que celles correspondant aux étapes b) et c) présentent une teneur en matière sèche de l'ordre de 10 à 30 % en poids, de préférence de l'ordre de 20 % en poids.

10. Procédé selon les revendications 1 à 9, caractérisé en ce qu'aux étapes a), b) et, le cas échéant c), on laisse agir l'eau sur les composants solides, avant la séparation, pendant 5 à 300 secondes, de préférence pendant environ 200 secondes.

11. Procédé selon les revendications 1 à 10, caractérisé en ce que
d) l'on met en suspension les composants solides obtenus au cours des étapes b) et/ou c) dans de l'eau, en ce qu on les soumet à un traitement thermique à des températures situées dans une plage de 150 à 200 °C, et en ce qu'on sépare la phase aqueuse des composants solides, et la récupère.

12. Procédé selon les revendications 1 à 10, caractérisé en ce que
d) l'on met en suspension les composants solides obtenus au cours des étapes b) et/ou c) dans de l'eau, en ce qu'on les soumet à un traitement thermique de courte durée à haute température, à des températures situées dans une plage de 200 à 400 °C, pendant une durée de 5 minutes à 0,01 seconde.

13. Procédé selon les revendications 1 à 12, caractérisé en ce que l'on soumet les phases aqueuses recueillies au cours des étapes a), b) et/ou c) à une décantation finale, séparément ou conjointement, dans un dispositif qui permet la séparation simultanée de l'huile de café.

14. Procédé selon les revendications 1 à 13, caractérisé en ce que le procédé est mis en oeuvre de façon continue, en ce que
i) l'on achemine le café torréfié ainsi que les composants solides obtenus au cours des étapes a) à d) respectivement vers l'étape suivante, de façon continue, au moyen de dispositifs convoyeurs appropriés, et en ce que
ii) l'on récupère de façon continue les phases aqueuses obtenues au cours des étapes a) à d).

15. Procédé selon la revendication 14, caractérisé en ce que l'on renvoie la phase aqueuse obtenue au cours de l'étape c) vers l'étape b).

16. Procédé selon les revendications 1 à 15, caractérisé en ce que l'on augmente la concentration des phases aqueuses recueillies au cours des étapes a), b), c) et/ou d), séparément ou conjointement, par évaporation et/ou par un traitement par membrane et/ou par congélation.

17. Procédé selon les revendications 1 à 16, caractérisé en ce que l'on dessèche les phases aqueuses recueillies au cours des étapes a), b), c) et/ou d), séparément ou conjointement, jusqu'à une teneur résiduelle en eau de 2 à 4 % en poids.

18. Procédé selon la revendication 17, caractérisé en ce que la dessiccation est réalisée par lyophilisation.

19. Procédé selon les revendications 1 à 16, caractérisé en ce que l'on stabilise les phases aqueuses recueillies au cours des étapes a), b), c) et/ou d), séparément ou conjointement, par surgélation.

20. Utilisation des extraits de café obtenus à partir des étapes a), b) et, le cas échéant, c) du procédé selon les revendications 1 à 10 et 13 à 18 pour aromatiser des produits destinés à la consommation humaine et/ou pour améliorer du café en poudre.
